(19) Europäisches Patentamt
European Patent Office
Office européen des brevets

(11) **EP 4 153 465 B1**

(12) **FASCICULE DE BREVET EUROPEEN**

(45) Date de publication et mention de la délivrance du brevet:
**10.07.2024 Bulletin 2024/28**

(21) Numéro de dépôt: **21725225.3**

(22) Date de dépôt: **18.05.2021**

(51) Classification Internationale des Brevets (IPC):
**G01P 21/02** (2006.01)   **B61L 15/00** (2006.01)
**G01P 15/00** (2006.01)   **G01P 7/00** (2006.01)
**G01C 21/16** (2006.01)   **B61L 25/02** (2006.01)

(52) Classification Coopérative des Brevets (CPC):
**B61L 15/0072; B61L 15/0081; B61L 25/021;**
**B61L 25/023; B61L 25/026; G01P 7/00;**
**G01P 21/02;** B61L 2205/04; G01P 15/00

(86) Numéro de dépôt international:
**PCT/EP2021/063132**

(87) Numéro de publication internationale:
**WO 2021/233912 (25.11.2021 Gazette 2021/47)**

(54) **PROCEDE DE CALCUL D'UN VECTEUR DE VITESSE INSTANTANEE D'UN VEHICULE FERROVIAIRE ET SYSTEME CORRESPONDANT**

VERFAHREN ZUR BERECHNUNG EINES SOFORTIGEN GESCHWINDIGKEITSVEKTORS EINES SCHIENENFAHRZEUGS UND ENTSPRECHENDES SYSTEM

METHOD FOR CALCULATING AN INSTANT SPEED VECTOR OF A RAILWAY VEHICLE AND CORRESPONDING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.05.2020 FR 2005112**

(43) Date de publication de la demande:
**29.03.2023 Bulletin 2023/13**

(73) Titulaire: **EXAIL**
**78100 Saint-Germain-en-Laye (FR)**

(72) Inventeurs:
• **MICHEL, Jean-Philippe**
**78100 Saint-Germain-en-Laye (FR)**

• **D'HARCOURT, Pierre**
**78100 Saint-Germain-en-Laye (FR)**

(74) Mandataire: **Jacobacci Coralis Harle**
**32, rue de l'Arcade**
**75008 Paris (FR)**

(56) Documents cités:
**EP-B1- 3 159 701     US-A1- 2003 216 865**

• **REIMER C ET AL: "INS/GNSS/odometer data fusion in railway applications", 2016 DGON INTERTIAL SENSORS AND SYSTEMS (ISS), IEEE, 20 September 2016 (2016-09-20), pages 1 - 14, XP033004824, DOI: 10.1109/INERTIALSENSORS.2016.7745678**

**Description**

**Domaine technique**

La présente invention concerne de manière générale le domaine du ferroviaire. Elle concerne plus particulièrement un procédé de calcul d'un vecteur de vitesse instantanée d'un véhicule ferroviaire comportant une centrale inertielle ainsi qu'un système correspondant. Elle permet d'obtenir des estimations de vitesse à partir de mesures d'une centrale inertielle, indépendamment d'autres appareils de mesure. Elle permet, éventuellement, le calcul en outre d'un vecteur d'accélération. Elle permet, à la suite, de déterminer notamment l'attitude et/ou le déplacement du véhicule ferroviaire. Les estimations obtenues peuvent servir au pilotage du véhicule et/ou à sa localisation.

**Arrière-plan technologique**

La localisation des véhicules ferroviaires en Europe et en particulier en France, dans le but d'assurer la sécurité des circulations, est actuellement assurée par des équipements le long des voies. Ils permettent de diviser la voie ferroviaire en cantons dans lesquels, en temps normal, il ne doit y avoir qu'un seul train à la fois. La réglementation européenne ERTMS/ETCS (European Rail Traffic Management System / European Train Control System), dont les standards sont aussi repris par des pays tels que la Russie ou la Chine, est déployée suivant cette méthodologie. L'objectif de la localisation ferroviaire est généralement de connaître la voie et la distance parcourue plutôt que les coordonnées géographiques (latitude, longitude et altitude). Un système de détection des trains au sol, tel que des circuits de voie ou des compteurs d'essieux, est associé à chaque canton afin de définir son état, libre ou occupé. Des balises placées en amont des signaux d'entrée de canton peuvent communiquer des données de signalisation au train et lui fournir une information de position. Des capteurs de vitesse ou de distance parcourue tels qu'un capteur de roue, un radar ou un radar Doppler embarqués à bord du véhicule ferroviaire permettent de calculer son déplacement entre deux balises. Ces systèmes nécessitent des recalibrations périodiques et peuvent aussi être perturbés par des phénomènes extérieurs tels que les conditions météorologiques (e.g. patinage) ou la présence d'obstacles comme un pont ou un tunnel. L'odométrie ferroviaire se base généralement sur des capteurs de roues dont l'information de vitesse est fortement dégradée en présence de glissement entre les roues et les rails. Cela intervient tout particulièrement lors des phases d'accélération ou de freinage du véhicule ferroviaire, et aussi en fonction des conditions météo ou de la saison (e.g. présence de feuilles mortes sur les rails). Pour remédier à cela, il a été proposé dans EP 2 219 930 B1, l'utilisation de deux capteurs de roue hybridés à un accéléromètre placé selon l'axe de déplacement du véhicule ferroviaire afin d'améliorer la mesure de vitesse avant, le vecteur vitesse n'étant pas estimé dans ce document. Il s'agit en particulier de détecter la perte d'adhérence afin d'être robuste aux phases de glissement. Il est néanmoins nécessaire de coupler l'accéléromètre à une base de données extérieur fournissant la pente et la courbure des rails. En outre, l'estimation du biais de l'accéléromètre n'est pas évoquée.

Le document EP 2 749 471 B1, quant à lui, porte sur l'utilisation de capteurs inertiels afin de mesurer la vitesse angulaire selon trois axes orthogonaux et l'accélération suivant la direction d'avancement. La mesure de l'accéléromètre est associée à celle de la vitesse angulaire afin de tenir compte de l'attraction terrestre lors du calcul de l'accélération longitudinale du véhicule ferroviaire. L'intégration de cette accélération permet ensuite d'évaluer sa vitesse selon son axe d'avancement ainsi que sa distance parcourue. Le biais de l'accéléromètre peut être évalué lorsque le véhicule ferroviaire est à l'arrêt. Cependant, lorsqu'il est en mouvement, un capteur de roue est nécessaire pour estimer ce biais sur une période de temps durant laquelle la roue ne glisse pas par rapport au rail. Une vitesse angulaire sensiblement constante sur une durée prédéterminée est observable à courbure constante non nulle ou lors d'une évolution constante de la pente ou du dévers de la voie. Une telle vitesse angulaire correspond à un biais qui est alors corrigé.

Le document EP 3 159 701 B1 divulgue un procédé de calcul de l'accélération propre liée uniquement au déplacement d'un véhicule ferroviaire le long de la voie ferrée à l'aide d'une centrale inertielle. De la même manière que pour le document précédent, son calcul est fait à partir de l'accélération réelle et de la prise en compte de la force gravitationnelle lié à la configuration des rails. L'estimation de la vitesse de déplacement du véhicule ferroviaire est faite à l'aide d'une analyse spectrale des accélérations réelles mesurées selon un axe vertical. Cette estimation améliore le calcul de l'accélération propre. L'estimateur utilise les mesures de la centrale inertielle dans des équations de correction. Des équations de prédiction sont mentionnées mais elles sont basées sur des hypothèses de mouvement non explicitées. Cette architecture n'est pas optimale pour une centrale inertielle gyrocompassante. Ce dernier document décrit aussi l'estimation des biais du gyromètre selon au moins deux axes, mais il n'évoque pas les biais de l'accéléromètre.

On connait également l'article de REIMER C ET AL: "INS/GNSS/odometer data fusion in railway applications", 2016 DGON INTERTIAL SENSORS AND SYSTEMS (188), IEEE, 20 septembre 2016 (2016-09-20), pages 1-14, XP033004824 qui décrit un système mettant en oeuvre un couplage d'une centrale inertielle avec un capteur virtuel qui fournit des vitesses nulles selon deux axes transverses au véhicule ferroviaire corrigées des angles de désalignements $\alpha$ et $\beta$. Toutefois, dans ce système, la centrale inertielle est couplée à un capteur de roue en continu et cela permet d'effectuer une mesure du vecteur vitesse complet avec la mesure du capteur de roue selon l'axe avant et des mesures nulles suivant les deux axes transverses corrigés des angles de désalignements $\alpha$ et $\beta$. Cette mesure est effectuée au niveau du capteur de roue en tenant compte de son bras de levier avec la centrale inertielle. Une matrice de désalignement supplémentaire proportionnel à la variation du cap permet de tenir compte de la rotation entre le bogie sur lequel se trouve l'odomètre et la caisse. Par contre, les effets de bras de levier dus à la différence entre la position réelle de la centrale inertielle par rapport à sa position idéale dans la caisse ne sont pas pris en compte. Enfin, les composantes transverses transitoires provoquées par les aiguillages et les raccordements, c'est-à-dire les termes $\gamma_y$ et $\gamma_z$, ne sont pas pris en compte dans ce système.

Il serait utile de disposer d'un système calculant la vitesse instantanée tridimensionnelle du véhicule ferroviaire sans faire appel à des informations provenant d'un capteur matériel de vitesse ou de distance parcourue auxiliaire ou provenant de l'extérieur du véhicule, et qui ne risque pas d'être perturbé et ne nécessite pas de recalibrage périodique, contrairement aux systèmes connus. Il serait utile que le système puisse s'autocalibrer afin d'éviter que du personnel ait à faire des opérations fastidieuses de calibration. Il serait préférable que ce système de calcul de la vitesse instantanée ne nécessite pas non plus l'utilisation d'une base de données, telle qu'une cartographie des voies ferrées, afin d'éviter les problèmes de mise à jour, de fiabilité, de précision et de stockage d'une telle base de données.

Il peut néanmoins être utile de pouvoir associer le système de calcul de la vitesse instantanée à des moyens de calcul supplémentaires et à des capteurs externes, par exemple un GPS ou équivalent et/ou un capteur matériel de vitesse ou de distance parcourue auxiliaire, ou même une base de données afin d'améliorer la précision des résultats obtenus et/ou de calculer d'autres informations utiles à partir de la vitesse instantanée tridimensionnelle obtenue, comme par exemple le déplacement tridimensionnel du véhicule ferroviaire, la position instantanée, le trajet... Dans tous les cas, ces capteurs externes, dont le capteur matériel de vitesse ou de distance parcourue auxiliaire, ne font pas partie du système et ne sont pas nécessaires au procédé de calcul de la vitesse instantanée du véhicule ferroviaire

## Exposé de l'invention

L'invention proposée, est basé sur la mise en oeuvre dans une caisse d'un véhicule ferroviaire, d'une centrale inertielle et d'un capteur virtuel au sein d'un estimateur, le capteur virtuel calculant des mesures virtuelles de deux vitesses transverses selon deux axes transverses à la caisse, et dans lequel estimateur, on considère que ces deux vitesses transverses sont nulles dans toutes les configuration de voies, les paramètres calculés au sein de l'estimateur à partir des mesures de la centrales inertielle et en fonction d'un modèle du véhicule, étant ajustés et corrigés itérativement pour respecter cette condition. Les deux vitesses transverses sont mesurées virtuellement sur deux axes perpendiculaires entre eux et à l'axe $x_c$ de la caisse du véhicule. Le capteur virtuel est construit sur la base d'un modèle du véhicule correspondant à la réponse dynamique d'un véhicule ferroviaire se déplaçant sur une voie ferrée, le véhicule ferroviaire pouvant être un véhicule générique ou, de préférence, le véhicule spécifiquement mis en oeuvre pour appliquer l'invention. Le système de l'invention permet une auto-calibration par l'exploitation des caractéristiques et des effets du tracé de voie sur la dynamique du véhicule ferroviaire.

Plus précisément, on propose selon l'invention, un procédé de calcul par un estimateur d'un vecteur de vitesse instantanée $\overrightarrow{V_u}$, d'un véhicule ferroviaire pouvant se déplacer le long d'une voie ferrée selon la revendication 1. D'autres caractéristiques non limitatives et avantageuses du procédé conforme à l'invention, sont les suivantes :

- l'estimateur calcule en outre un ou plusieurs de : un vecteur rotation instantanée $\overrightarrow{\omega_u}$, un déplacement du véhicule, une position du véhicule, une attitude du véhicule, des écart-types des valeurs calculées par l'estimateur,
- pour pouvoir calculer la position du véhicule, la position initiale du véhicule est fournie,
- on installe la centrale inertielle dans la caisse du véhicule de manière à ce que l'axe selon $x$ de la centrale inertielle soit incliné au maximum dans un cône de 5° par rapport l'axe $x_c$ de la caisse du véhicule ou, sinon, on effectue un calibrage préalable et ensuite, lors du calcul d'au moins du vecteur de vitesse instantanée $\overrightarrow{V_u}$ par l'estimateur, on traite les mesures de la centrale inertielle afin que les mesures produites par la centrale inertielle et traitées correspondent à celles d'une centrale inertielle qui aurait été installée de manière à ce que l'axe selon $x$ de la centrale inertielle soit incliné au maximum dans un cône de 5° par rapport l'axe $x_c$ de la caisse du véhicule,

- on calcule $\delta v_{y_c}$ et $\delta v_{z_c}$ sur la base du modèle du véhicule $M(\overrightarrow{O_1 O_2}, \alpha, \beta, \overrightarrow{v_{o1}}, \overrightarrow{\omega}, \delta v_{y_c}, \delta v_{z_c})$ par :

$$
\begin{cases}
\delta v_{y_c} = -\alpha \left( v_{O_{1_x}} + \omega_y O_1 O_{2_z} - \omega_z O_1 O_{2_y} \right) + v_{0_{1_y}} + \omega_z O_1 O_{2_x} - \omega_x O_1 O_{2_z} \\
\delta v_{z_c} = \beta \left( v_{0_{1_x}} + \omega_y O_1 O_{2_z} - \omega_z O_1 O_{2_y} \right) + v_{0_{1_z}} + \omega_x O_1 O_{2_y} - \omega_y O_1 O_{2_x}
\end{cases}
$$

- les paramètres permettant au capteur virtuel de calculer les deux vitesses théoriques transverses $\delta v_{y_c}$ et $\delta v_{z_c}$ comportent en outre la distance inter-boggies $B_1B_2$, et

en ce qu'on calcule $\delta v_{y_c}$ et $\delta v_{z_c}$ sur la base d'un modèle du véhicule $M(\overrightarrow{O_1O_2}, \alpha, \beta, B_1B_2, \overrightarrow{v_{o1}}, \overrightarrow{\omega}, \delta_{v_{yc}}, \delta v_{z_c})$ par :

$$\begin{cases} \delta v_{y_c} = -\alpha \left( v_{O_{1_x}} + \omega_y O_1 O_{2_z} - \omega_z O_1 O_{2_y} \right) + v_{0_{1_y}} + \omega_z O_1 O_{2_x} - \omega_x O_1 O_{2_z} + \gamma_y \\ \delta v_{z_c} = \beta \left( v_{O_{1_x}} + \omega_y O_1 O_{2_z} - \omega_z O_1 O_{2_y} \right) + v_{0_{1_z}} + \omega_x O_1 O_{2_y} - \omega_y O_1 O_{2_x} + \gamma_z \end{cases}$$

où $\gamma$ correspond à une vitesse transversale transitoire dépendant de $\overrightarrow{v_{o1}}$, des variations temporelles de $\overrightarrow{\omega}$ et de la distance inter-boggies $B_1B_2$,

- au moins un des paramètres d'installation $\overrightarrow{O_1O_2}$, $\alpha$ et $\beta$ et, éventuellement $B_1B_2$, est initialisé dans l'estimateur par une mesure dudit paramètre in-situ dans la caisse du véhicule,
- au moins un des paramètres d'installation $\overrightarrow{O_1O_2}$, $\alpha$ et $\beta$ et, éventuellement $B_1B_2$, est initialisé dans l'estimateur par une mesure dudit paramètre in-situ dans la caisse du véhicule et ledit paramètre d'installation n'est pas estimé dans l'estimateur,
- dans l'estimateur, le capteur virtuel de vitesse est configuré pour calculer des vitesses transverses instantanées ou, alors, des vitesses transverses intégrées sur la durée $\dfrac{1}{f_{maj}}$ de l'étape de mise à jour avec $f_{maj}$ la fréquence de mise à jour de l'estimateur,
- on met en oeuvre un estimateur qui comporte un filtre de Kalman,
- on met en oeuvre une centrale inertielle qui est gyrocompassante,
- le véhicule comporte un axe antéro postérieur principal médian de sa caisse,
- l'axe $x_c$ de la caisse du véhicule est supposé parallèle à l'axe antéro postérieur principal médian de la caisse du véhicule,
- lors de l'installation de la centrale inertielle dans la caisse du véhicule, on assume que l'axe $x_c$ est parallèle à l'axe antéro postérieur principal médian de la caisse du véhicule,
- lors de l'installation de la centrale inertielle dans la caisse du véhicule, on assume que l'axe antéro postérieur principal médian de la caisse du véhicule est parallèle au vecteur de vitesse instantanée du véhicule lors d'un déplacement rectiligne à dévers constant de la caisse du véhicule,

L'invention concerne également un système permettant de calculer un vecteur de vitesse instantanée $\overrightarrow{V_u}$, d'un véhicule ferroviaire pouvant se déplacer le long d'une voie ferrée selon la revendication 10.

De préférence, l'estimateur est un calculateur programmable.

Le calculateur programmable comporte avantageusement un microprocesseur et/ou un processeur de traitement de signaux numériques (DSP).

**Brève description des dessins**

[Fig. 1] représente une vue schématique de dessus d'une caisse d'un véhicule ferroviaire s'inscrivant dans une courbe de la voie ferrée,

[Fig. 2] représente une vue schématique en coupe transversale d'une caisse de véhicule ferroviaire sur une voie ferrée en dévers,

[Fig. 3] représente une vue schématisant, à l'aide du repère de passage $x_p$, $y_p$, $z_p$, les angles de désalignements $\alpha$ et $\beta$ positifs pour une rotation dans le sens direct entre l'axe $x$ d'un repère orthonormé $x$, $y$, $z$ centré en un point $O_1$ de la centrale inertielle et l'axe $x_c$ de la caisse du véhicule, et

[Fig. 4] représente une vue schématique de l'architecture du système basé sur le couplage des mesures des gyromètres et des accéléromètres avec celles du capteur virtuel dans le cadre d'un filtre de Kalman produisant en particulier le vecteur vitesse du véhicule ferroviaire

**Description détaillée d'un exemple de réalisation**

La description qui va suivre en regard des dessins annexés, donnés à titre d'exemples non limitatifs, fera bien comprendre en quoi consistent le procédé et le système de l'invention et comment ils peuvent être réalisés.

Dans son principe, le système de l'invention comporte une centrale inertielle fixe qui est fixée à l'intérieur de la caisse d'un véhicule ferroviaire et dont les mesures selon un repère $x$, $y$, $z$ sont traitées par un estimateur afin de produire en sortie au moins le vecteur vitesse instantanée $\overrightarrow{V_u}$ du véhicule. Le système de l'invention peut produire en outre d'autres résultats en sortie et notamment, le vecteur rotation instantanée $\overrightarrow{\omega_u}$ et/ou l'attitude du véhicule ferroviaire et/ou sa position géographique si sa position initiale est connue initialement. Ces résultats en sortie sont échantillonnés sous forme de signaux numériques et sont référencés par rapport au référentiel attaché à la caisse $x_c$, $y_c$, $z_c$ ou au référentiel géographique. L'estimateur, met en oeuvre un capteur virtuel basé sur un modèle mathématique du véhicule qui utilise un repère $x_c$, $y_c$, $z_c$ fixe par rapport à sa caisse, l'axe $x_c$ étant colinéaire au vecteur de vitesse instantanée du véhicule lors d'un déplacement rectiligne à dévers constant de la caisse du véhicule. L'estimateur utilise le fait que les deux vitesses transverses calculées par le capteur virtuel sur les deux axes $y_c$ et $z_c$ transverses/perpendiculaire à l'axe $x_c$ sont toujours nulles, peu importe les conditions de circulation.

L'estimateur est configuré pour corriger les biais des mesures de la centrale inertielle et les effets créés par les paramètres d'installation (qui ne peuvent être parfaits) selon le principe que les deux vitesses transverses calculées par le capteur virtuel sont par principe nulles dans toutes les conditions de circulation. Parmi ces paramètres d'installation, on peut citer :

- L'orientation imparfaite de la centrale inertielle par rapport à la caisse dont l'effet est d'engendrer des vitesses transverses non nulles dès que le véhicule est en mouvement, ces vitesses dépendant de la vitesse curviligne et des deux angles de désalignements $\alpha$, $\beta$, entre les repères de la centrale inertielle et de la caisse du véhicule ;
- La position $O_1$ du repère de la centrale inertielle dans la caisse par rapport à un point $O_2$ situé sur l'axe de roulis de la caisse entre les deux boggies, cet écart ayant pour effet d'engendrer des vitesses transverses non nulles en présence d'une courbure non nulle de la voie, d'une variation du dévers ou de la déclivité de la voie. Ces vitesses transverses dépendent de la vitesse de rotation de la caisse circulant sur la courbure de la voie et du bras de levier $O_1O_2$ séparant la centrale inertielle et le point $O_2$. On verra que ce point $O_2$ peut se déplacer en fonction de la dynamique ferroviaire et qu'il est éventuellement possible de tenir compte de ces déplacements ;
- La distance inter-boggies $B_1B_2$ qui engendre des vitesses transverses non nulles lors d'une variation de la courbure de rails, en particulier lors du passage sur un aiguillage en déviation ou sur un raccordement cubique, mais aussi lors d'une variation non linéaire de la déclivité. Ces vitesses transverses dépendent de l'accélération de la rotation de la caisse et de la distance inter-boggies et de la vitesse de la caisse.

Dans l'estimateur, le capteur virtuel de vitesse peut être configuré pour fournir des vitesses transverses instantanées ou des vitesses transverses intégrées sur le pas de temps de l'étape de mise à jour du filtre de navigation, cette deuxième possibilité permet de diminuer le bruit de mesure du capteur virtuel.

L'estimateur de l'invention, qui assure un couplage entre la centrale inertielle et le capteur virtuel, met en oeuvre un estimateur d'états tel qu'un filtre de Kalman. Cet estimateur permet d'estimer et de corriger les biais et paramètres suivants :

- En ce qui concerne des paramètres d'installation, premièrement, les deux angles de désalignements $\alpha$, $\beta$, entre les axes du repère de la centrale inertielle et du repère de la caisse du véhicule et plus précisément entre respectivement les axes $x$ et $x_c$, deuxièmement, les trois composantes du bras de levier $O_1O_2$, en pratique le vecteur : $\overrightarrow{O_1O_2}$ et, troisièmement, la distance inter-boggies $B_1B_2$ ;
- Les biais $\overrightarrow{b_a}$ des trois accéléromètres et les biais $\overrightarrow{b_\omega}$ des trois gyromètres constituants la centrale inertielle ;
- Les écart-types de l'ensemble des états et en particulier celui du vecteur vitesse et, possiblement, d'autres vecteurs calculés (e.g. rotation, attitude, déplacement) si des calculs supplémentaires sont effectués.

Le procédé et le système mettent en oeuvre une centrale inertielle comportant six capteurs : trois accéléromètres et trois gyromètres. Chaque trièdre de capteurs forme un repère de l'espace. On note ici ($O_1$, $x$, $y$, $z$) le repère orthonormé direct qui est centré en $O_1$ sur la centrale inertielle, et qui comporte les trois axes $x$, $y$, $z$, et sur lesquels les mesures peuvent être projetées. Les mesures d'accélération $\overrightarrow{a_m}$ et de rotation $\overrightarrow{\omega_m}$ produites par la centrale inertielle sont donc référencées à ce repère ($O_1$, $x$, $y$, $z$) et ce repère peut être intrinsèque/préétabli par construction ou être paramétrable. Dans le cas d'une centrale inertielle paramétrable, la centrale comporte des moyens de calcul de changement de repère entre son repère intrinsèque/préétabli et un repère alternatif qui est une donnée de paramétrage de la centrale, les mesures produites par la centrale inertielle correspondant alors au repère alternatif paramétré.

Tout type de centrale inertielle peut être mise en oeuvre dans le cadre de l'invention : par exemple une centrale inertielle performante pour maintenir un cap précis, une centrale inertielle gyrocompassante ou toute autre centrale équivalente.

Une centrale inertielle gyrocompassante est capable de s'initialiser/s'étalonner de manière autonome à la suite d'une phase statique dont la durée typique est de quelques minutes. De préférence, on met en oeuvre une centrale inertielle gyrocompassante.

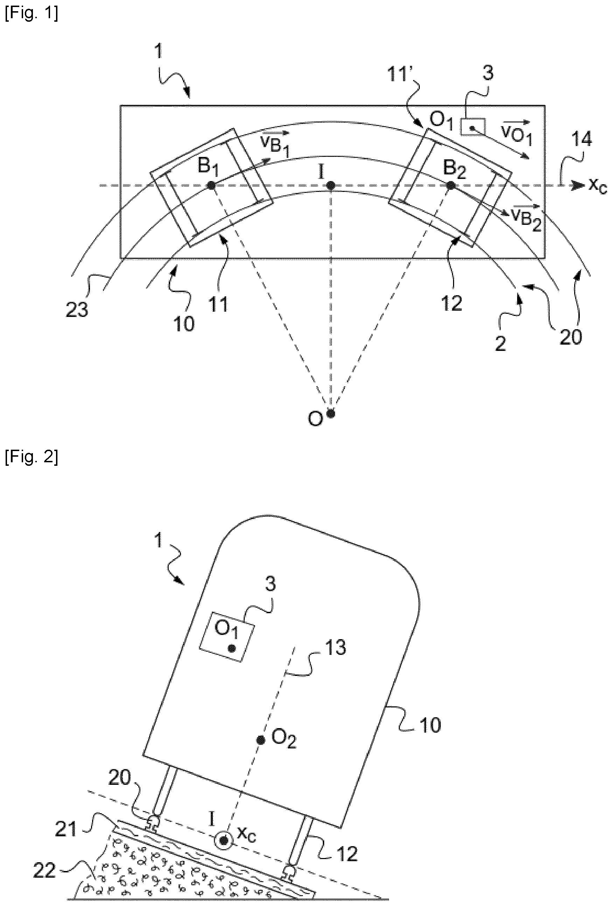

Le véhicule ferroviaire comporte une caisse et deux boggies, un avant et un arrière, sur lesquels sont fixés des essieux. Les boggies admettent chacun un axe de rotation par rapport à la caisse afin de suivre toute courbe définie par la voie. Par convention, pour les explications, on considérera que les points $B_1$, $B_2$ (figure 1) correspondent aux intersections entre les axes de rotation des boggies avant et arrière avec un plan de roulement commun des boggies. Le plan de roulement correspond au plan contenant les zones de contact entre les roues des essieux et les rails. Dans la suite on considérera un plan de roulement commun aux deux boggies mais une modalité de réalisation plus évoluée, il est possible de prendre en compte chaque plan de roulement de boggie car ils ne sont pas forcément superposables, en particulier lors d'une rupture de pente ou lors de la prise de dévers. On considère donc pour la suite que $B_1$ et $B_2$ sont fixes par rapport à la caisse.

Le véhicule comportant le système de l'invention est schématisé sur les figures 1 et 2.

Sur la figure 1, le véhicule 1 comporte une caisse 10 roulant sur des rails 20 d'une voie 2 ferrée grâce à deux boggies 11, 11' comportant chacun deux essieux 12. La caisse 10 est allongée longitudinalement. Chaque boggie 11, 11' est articulé à la caisse 10 par un axe de rotation passant par les points $B_1$, $B_2$ situés dans plan de roulement commun des boggies. Par construction, du fait d'une certaine symétrie du véhicule, les axes de rotation des boggies, en l'absence de contrainte, coupent l'axe antéro-postérieur principal médian de la caisse 10 et sont dans un plan antéro-postérieur/longitudinal et sagittal/vertical de la caisse 10.

Par convention, l'axe $x_c$ 14 de la caisse est colinéaire au vecteur de vitesse instantanée $\overrightarrow{V_u}$ du véhicule 1 lors d'un déplacement rectiligne à dévers constant de la caisse du véhicule. Un tel mouvement rectiligne à dévers constant permet de déterminer ce vecteur vitesse puisqu'il est alors identique en tous points de la caisse. Par convention on place l'axe $x_c$ dans le plan de roulement commun des boggies (voir figure 2).

On peut noter que la droite reliant les deux points $B_1$ et $B_2$ des deux boggies est parallèle à l'axe $x_c$. On comprend que l'origine du repère fixe $x_c$, $y_c$, $z_c$ n'a pas d'importance et que le point $O_2$, qui ne correspond pas à cette origine, peut se déplacer suivant les déplacements de l'axe de roulis.

Le segment $[B_1B_2]$ joignant les deux points $B_1$ et $B_2$ définit la distance inter-boggies $B_1B_2$ entre les deux boggies 11, 11' et on considère un point $I$ au milieu du segment $[B_1B_2]$. Une centrale inertielle 3 est fixée en un point déterminé de la caisse 10 et est repérée par l'origine $O_1$ du repère ($O_1,x,y,z$) des mesures. La centrale inertielle 3 permet de produire une mesure de vitesse symbolisée par le vecteur vitesse $\overrightarrow{v_{o1}}$. De préférence, la centrale inertielle est fixée à l'intérieur de la caisse.

Sur la figure 1, la voie 2 est en courbe, schématisée par un arc de cercle et cette courbe a pour rayon $OB_1$ = $OB_2$ par convention (le milieu 23 de la voie 2 sert de référence pour définir le rayon de la courbe). Chaque boggie 11, 11' présente un vecteur vitesse tangent au milieu 23 de la voie, respectivement $\overrightarrow{v_{B1}}$ pour le boggie 11 de point $B_1$ et $\overrightarrow{v_{B2}}$ pour le boggie 11' de point $B_2$.

Sur la figure 2, la caisse 10 du véhicule 1 de la figure 1 est représentée selon une coupe transversale (perpendiculaire à l'axe antéro postérieur principal médian de la caisse et donc perpendiculaire à $x_c$) et médiane (car passant par le point $I$, milieu de $B_1B_2$). Etant donné que le véhicule est sur une courbe, un dévers de la voie est présent. La voie est constituée de rails 20, sur traverses 21, reposant sur un lit de ballast 22. Par convention on a placé les points $B_1$ et $B_2$ sur le plan de roulement commun des boggies et l'axe $x_c$ et le point $I$ s'y retrouvent donc également. On a aussi représenté dans cet exemple le point $O_2$ qui est à l'intersection entre l'axe de roulis de la caisse et le plan orthogonal à $x_c$ contenant $I$. Un axe 13, $IO_2$ est ainsi défini. On peut noter qu'il est possible de réaliser l'invention en utilisant un point $O_2$ qui n'est pas exactement à l'intersection entre l'axe de roulis de la caisse et du plan orthogonal à $x_c$ contenant $I$. On considère qu'un point $O_2$ placé à une distance $D$ déterminée, autour de ladite intersection entre l'axe de roulis de la caisse et le plan orthogonal à $x_c$ contenant $I$, permet d'obtenir des résultats satisfaisants si $D$ est typiquement inférieur à 1 m. On comprend que cette distance $D$ peut être plus ou moins réduite ou augmentée en fonction de la précision des calculs permettant de mesurer ou d'estimer la position du point $O_2$, du tracé de voie que le véhicule ferroviaire est susceptible de rencontrer et de certaines de ses caractéristiques telles que sa distance inter-bogies, la distance inter-essieux de ses bogies et l'effet de ses suspensions. Ainsi, par exemple, on peut prévoir que ce point $O_2$ puisse être placé en un point disposé dans une sphère de rayon 1 m centrée sur ladite intersection. On peut prévoir une autre forme qu'une sphère pour la zone de positionnement du point $O_2$ autour de ladite intersection.

La centrale inertielle est installée dans la caisse de manière à ce que, de préférence, l'axe $x$ de mesure du repère de la centrale inertielle soit parallèle avec une précision d'au moins 5° à l'axe $x_c$ 14 de la caisse du véhicule ferroviaire. Ce positionnement en alignement est donc assuré physiquement lors de l'installation mécanique de la centrale inertielle dans la caisse. On verra que cette condition permet d'effectuer des simplifications dans les calculs et d'éviter une phase préalable de calibrage permettant d'estimer l'angulation entre l'axe $x$ et l'axe $x_c$ puis de traitement en continu des mesures pour correction de l'angulation et permettant de faire les simplifications en question. On comprend alors que dans une variante de mise en oeuvre on peut choisir de ne pas positionner la centrale inertielle avec la précision d'au moins 5° indiquée et de mettre en oeuvre la phase d'estimation préalable et les corrections ultérieures en continu pour rapprocher en alignement les axes par calcul.

Ainsi, dans des variantes, ce positionnement en alignement peut être effectué par calcul dans une centrale inertielle paramétrable en choisissant de prendre x colinéaire au vecteur vitesse qu'elle estime. Autrement dit, confondre cap et course permet d'avoir des angles de désalignements $\alpha$, $\beta$, entre l'axe $x$ et l'axe $x_c$ 14 inférieurs à 5°. Ce positionnement en alignement d'une précision d'au moins 5° peut aussi être réalisé par calcul dans la centrale inertielle et avec l'aide d'un capteur externe tel qu'un récepteur de signal GNSS.

Le positionnement des deux autres axes $y$ et $z$ du repère de mesure de la centrale inertielle 3 peut être quelconque. Cependant, il est possible de positionner grossièrement l'axe $y$ dans le plan ou un plan parallèle au plan de roulement commun des boggies, et/ou l'axe z sensiblement verticalement. En pratique, l'axe z peut se déplacer selon les conditions de roulement, en particulier, il n'est pas vertical lors d'un arc de cercle avec un fort dévers des rails, ce qui provoque un roulis de la caisse pouvant atteindre 10°, la centrale inertielle étant fixée à la caisse.

Concernant le procédé de calcul mis en oeuvre dans l'estimateur du système, le capteur virtuel de l'estimateur comporte des moyens de calcul permettant de calculer deux vitesses théoriques transverses $\delta v_{yc}$ et $\delta v_{zc}$. L'estimateur effectue ses calculs par itérations et sous la contrainte que ces deux vitesses théoriques transverses $\delta v_{yc}$ et $\delta v_{zc}$ sont nulles.

L'algorithme du système fonctionne avec un estimateur global type filtre de Kalman fonctionnant à une fréquence de mise à jour $f_{maj}$ qui est la fréquence de l'étape de mise à jour. Cela permet d'améliorer la connaissance, d'une part, des grandeurs de navigation inertielle (en particulier $\vec{v_{O1}}$) et, d'autre part, des biais de la centrale inertielle ($\vec{b_a}$, $\vec{b_\omega}$) et des paramètres d'installation, ($\vec{O_1O_2}$, $\alpha$, $\beta$) ou ($\vec{O_1O_2}$, $\alpha$, $\beta$, $B_1B_2$), propres au capteur virtuel lors de l'étape de correction. Par ailleurs, cela permet aussi de calculer les écart-types des différentes grandeurs et de fournir ainsi un indicateur de précision pour les données en sortie, en particulier pour le vecteur vitesse. Les données en sortie, dont au moins le vecteur de vitesse instantanée $\vec{V_u}$, sont fournies à une fréquence de sortie $f_{sortie}$ qui est un sous-multiple de $f_{pred}$ (fréquence de l'étape de prédiction).

On va maintenant décrire à titre d'exemple de mise en oeuvre une modalité de calcul des vecteurs vitesse et rotation instantanées par l'estimateur selon certaines hypothèses. Cet exemple n'exclut pas d'autres modalités de calcul. Tout d'abord, un algorithme de navigation inertielle utilisé dans une étape de prédiction d'un bloc de prédiction réalise l'intégration des mesures des gyromètres et des accéléromètres de la centrale inertielle 3 à une fréquence de prédiction $f_{pred}$ qui est la fréquence de l'étape de prédiction utilisant directement les mesures de la centrale inertielles.

L'algorithme de navigation inertiel se base notamment sur l'équation différentielle de vitesse exprimée ici dans le repère de la centrale inertielle :

$$\dot{\vec{v_{O_1}}} = \vec{a} + \vec{g} - (\vec{\omega} + 2\vec{\omega_t}) \times \vec{v_{O_1}}$$

avec :

- $\vec{v_{o1}}$ le vecteur vitesse du point $0_1$ de la caisse ;
- $\vec{\omega_t}$ le vecteur rotation du repère terrestre par rapport à un repère inertiel ;
- $\vec{g}$ la pesanteur terrestre ;
- $a$ le vecteur des accélérations propres de la caisse corrigé des biais des trois accéléromètres : $\vec{a} = \vec{a_m} + \vec{b_a}$ où $\vec{a_m}$ est la mesure par les trois accéléromètres de la centrale inertielle des accélérations et $\vec{b_a}$ les biais des trois accéléromètres ;
- $\vec{\omega}$ le vecteur rotation de la caisse par rapport au repère terrestre corrigé des biais des trois gyromètres : $\vec{\omega} = \vec{\omega_m} + \vec{b_w}$ où $\vec{\omega_m}$ est la mesure par les trois gyromètres de la centrale inertielle des rotations et $\vec{b_\omega}$ les biais des trois gyromètres ;

L'équation $\dot{\vec{v_{O_1}}} = \vec{a} + \vec{g} - (\vec{\omega} + 2\vec{\omega_t}) \times \vec{v_{O_1}}$ permet ainsi de déterminer la vitesse à partir des mesures de la centrale inertielle. Toutefois, ces mesures issues de la centrale inertielle sont entachées des trois biais $\vec{b_a}$ des

accéléromètres à travers $\vec{a}$ et des trois biais $\vec{b_\omega}$ des gyromètres à travers $\vec{\omega}$. Ces six biais de mesure ont également un impact sur l'orientation du repère de la centrale inertielle par rapport à la Terre.

Le capteur virtuel qui est basé sur un modèle du véhicule M($\overrightarrow{O_1O_2}$, $\alpha$, $\beta$, $\vec{v_{o1}}$, $\vec{\omega}$, $\delta v_{y_c}$, $\delta v_{z_c}$), calcule les vitesses transverses $\delta v_{y_c}$ et $\delta v_{z_c}$ suivant les axes $y_c$ et axes $z_c$, à partir des grandeurs $\overrightarrow{O_1O_2}$, $\alpha$, $\beta$, $\vec{v_{o1}}$, $\vec{\omega}$. On peut noter que, connaissant $\vec{\omega}$, il est possible de calculer les variations temporelles du vecteur rotation $\vec{\omega}$.

Dans l'exemple de réalisation, le modèle du véhicule est simplifié en ce qu'on néglige les effets de glissement des boggies par rapport à la caisse, les effets de la conicité des roues, qu'on fait l'hypothèse de considérer les points $B_1$ et $B_2$ comme solidaires avec la caisse et, enfin, une partie seulement des effets des suspensions primaires et secondaires est corrigée, cette correction concernant le roulis. On comprend cependant qu'il est possible de mettre en oeuvre un modèle du véhicule encore plus évolué pour tenir compte et corriger ce/ces effets.

Malgré l'installation et une phase d'initialisation, qui correspondent à une installation mécanique précise et/ou qui est logicielle en considérant que le cap est confondu avec la course, au cours de laquelle on a cherché à aligner au mieux les axes $x$ et $x_c$, il subsiste un désalignement, généralement inférieur à 5°, entre l'axe $x$ et l'axe $x_c$. Ce désalignement correspond à des angles de désalignements $\alpha$, $\beta$, subsidiaires qui peuvent être estimés dans l'estimateur. En effet, il s'agit de l'unique source de vitesse selon les deux axes transverses $y_c$ et $z_c$ lors d'un déplacement rectiligne à dévers constant.

En plus du désalignement entre les axes $x$ et $x_c$, le capteur virtuel admet certains biais pouvant être modélisés par un modèle du véhicule ferroviaire couplé à l'étude des configurations de rails possibles. Il est admis que les courbures que peuvent prendre les rails sont les suivantes :

- Courbure nulle : le véhicule circule en ligne droite ;
- Courbure constante non nulle : courbe en arc de cercle ;
- Variation quasi linéaire de la courbure selon un raccordement cubique, une telle courbe correspondant à un développement limité à l'ordre un de la clothoïde dont la courbure varie de manière exactement linéaire ;
- Variation discontinue de la courbure lors d'un aiguillage.

Le dévers et la déclivité des rails peuvent également varier. Dans la majorité des cas le dévers est nul en ligne droite et constant avec un angle faible lors d'une courbe en arc de cercle afin de limiter l'accélération latérale/centrifuge ressentie par un passager du véhicule. La prise de dévers a généralement lieu lors d'un raccordement cubique.

En relation avec la figure 1, considérant $B_1$ et $B_2$ fixes par rapport à la caisse et cette dernière indéformable, il est possible d'écrire les relations suivantes entre les vitesses et rotation :

$$\begin{cases} \vec{v_{O_1}} = \vec{v_{B_1}} + \vec{\omega} \times \overrightarrow{B_1O_1} \\ \vec{v_{O_1}} = \vec{v_{B_2}} + \vec{\omega} \times \overrightarrow{B_2O_1} \end{cases}$$

Sachant que $\overrightarrow{B_1O_1} + \overrightarrow{B_2O_1} = 2\overrightarrow{IO_1}$, la moyenne des deux relations précédentes permet d'exprimer la vitesse $\vec{v_{o1}}$ au niveau de $O_1$ à partir de $\vec{\omega}$, $\overrightarrow{IO_1}$ et des vitesses en $B_1$ et $B_2$, soit :

$$\vec{v_{O_1}} = \frac{1}{2}\left(\vec{v_{B_1}} + \vec{v_{B_2}}\right) + \vec{\omega} \times \overrightarrow{IO_1}$$

Les vitesses en $B_1$ et $B_2$ sont considérées tangentes à la voie au niveau du plan de roulement.

Le terme $\frac{1}{2}\left(\vec{v_{B_1}} + \vec{v_{B_2}}\right)$ admet les composantes transverses suivantes selon la typologie de la voie ferrée :

- Lors de la prise de dévers : $\vec{\omega} \times \overrightarrow{O_2I}$;
- Lors d'une variation de la courbure ou de la déclivité des rails : $-\vec{\gamma}$, où $\vec{\gamma}$ dépend de $\vec{v_{O_1}}$, des variations temporelles du vecteur rotation $\vec{\omega}$ et de la distance inter-boggies $B_1B_2$, Ce terme $\vec{\gamma}$ qui correspond à une vitesse transversale transitoire est optionnel et modélise les biais transitoires résultant d'un raccordement cubique ou d'un aiguillage ;
- Les composantes transverses s'annulent à courbure constante et lors d'une variation linéaire de la déclivité.

Ainsi, on peut déterminer, à partir du modèle du véhicule, une vitesse $\vec{v_{mv}}$ qui doit être théoriquement dans l'axe $x_c$ de la caisse du véhicule ferroviaire et qui est calculée par la formule suivante :

$$\overrightarrow{v_{mv}} = \overrightarrow{v_{O_1}} + \vec{\omega} \times \overrightarrow{O_1 O_2} + \vec{\gamma}$$

Le terme $\vec{\omega} \times \overrightarrow{O_1 O_2}$ permet de tenir compte d'un bras de levier entre le capteur virtuel supposé placé au point $O_2$ et la centrale inertielle.

Les composantes du vecteur $\overrightarrow{O_1 O_2}$ peuvent être estimées dans l'estimateur et/ou prédéterminés car mesurées lors de l'installation de la centrale inertielle dans la caisse et faire partie de paramètres d'installation prédéterminés.

Plus généralement certains ou tous les paramètres d'installation, $\overrightarrow{O_1 O_2}$, $\alpha$, $\beta$ et l'écart entre $B_1$ et $B_2$, peuvent être prédéterminés par des mesures in-situ sur le véhicule et être entrés dans l'estimateur pour initialisation de ce dernier. Ces paramètres d'installation prédéterminés ou non sont ensuite estimés (pour affinage pour les paramètres prédéterminés) par l'estimateur lors de la mise en oeuvre de ce dernier pour le calcul du vecteur vitesse instantanée. Dans certaines variantes, il est possible de ne pas estimer dans l'estimateur le ou des paramètres d'installation prédéterminés et d'effectuer les calculs avec les valeurs prédéterminées correspondantes qui ne sont donc pas affinées.

Par ailleurs, il est possible de ne considérer que certains termes de la formule de calcul de la vitesse $\overrightarrow{v_{mv}}$. En particulier, on peut ne pas prendre en compte le terme $\vec{\gamma}$ qui est fonction de la distance inter-boggies $B_1 B_2$, Ainsi, concernant la distance inter-boggies $B_1 B_2$, paramètre d'installation agissant sur le terme $\vec{\gamma}$, il est possible de ne pas la prendre en compte dans l'estimateur ou si on la prend en compte on peut utiliser une valeur prédéterminée qui n'est pas estimée par l'estimateur ou, inversement, que l'on fait estimer par l'estimateur.

Plus généralement, on comprend que pour l'initialisation des paramètres d'installation dans l'estimateur on peut utiliser toute valeur utile et, avantageusement, des valeurs prédéterminées résultant de mesures in-situ afin de permettre, pour les paramètres estimés par l'estimateur, une convergence plus rapide de l'estimation.

Concernant $\overrightarrow{O_1 O_2}$, si $O_1$ est normalement bien fixe par rapport à la caisse du fait que la caisse est rigide et que la centrale inertielle y est solidement et rigidement fixée, ce n'est pas forcément le cas de $O_2$ qui peut dépendre de la dynamique ferroviaire, notamment du fait, par exemple, de la présence d'amortisseurs de chaque côté latéral des boggies, de réservoirs de liquides dont les liquides peuvent se déplacer.

Il est donc particulièrement avantageux que l'estimateur estime en continu les composantes du vecteur $\overrightarrow{O_1 O_2}$.

Concernant le désalignement entre l'axe $x$ et l'axe $x_c$, il est aussi particulièrement avantageux que l'estimateur estime en continu les angles de désalignements $\alpha$, $\beta$.

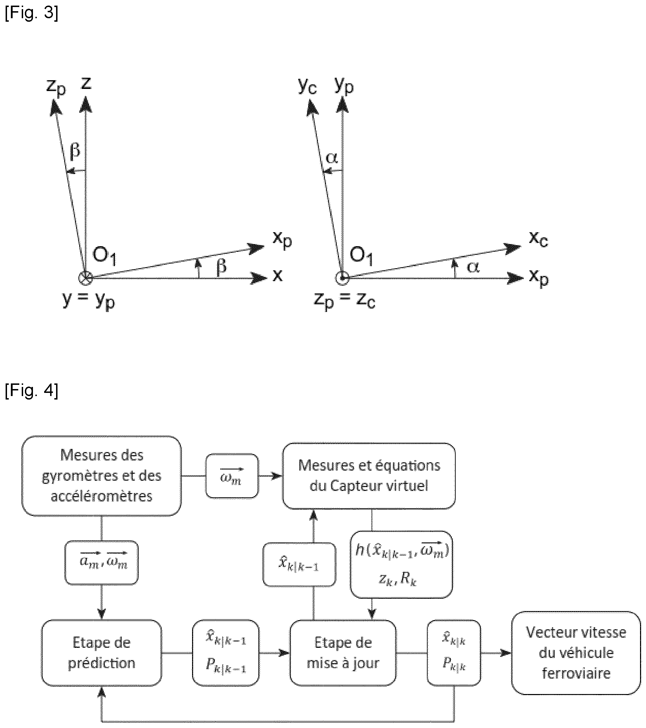

La figure 3, donne une représentation du repère de passage $x_p$, $y_p$, $z_p$ entre les deux en fonction des angles de désalignements $\alpha$, $\beta$. Sur la figure 3, les angles sont positifs dans le sens de rotation directe du repère orthonormé considéré et l'angle $\alpha$ est donc positif et l'angle $\beta$ est négatif. Les angles de désalignements $\alpha$, $\beta$, subsidiaires sont les angles d'Euler permettant de passer de l'axe $x$ à l'axe $x_c$ de la façon suivante : rotation d'un angle $\beta$ autour de l'axe $y$ (partie gauche de la figure 3) et rotation d'un angle $\alpha$ autour de l'axe $z_p$ (partie droite de la figure 3). En d'autres termes, l'angle $\alpha$ est l'angle de désalignement en cap entre l'axe $x$ et l'axe $x_c$, et l'angle $\beta$ est l'angle de désalignement en tangage entre l'axe $x$ et l'axe $x_c$. Pour l'estimateur, les calculs sont les suivants : soit $C(\alpha, \beta)$ la matrice de correction des angles de désalignements $\alpha$ et $\beta$ permettant le passage de $x$ à $x_c$. Cette matrice s'écrit :

$$C(\alpha, \beta) = \begin{pmatrix} \cos(\alpha)\cos(\beta) & \sin(\alpha) & -\cos(\alpha)\sin(\beta) \\ -\sin(\alpha)\cos(\beta) & \cos(\alpha) & \sin(\alpha)\sin(\beta) \\ \sin(\beta) & 0 & \cos(\beta) \end{pmatrix}$$

En utilisant les notations suivantes permettant d'exprimer les différentes grandeurs dans le repère de la centrale inertielle :

$$\overrightarrow{v_{O_1}} = \begin{pmatrix} v_{O_{1x}} \\ v_{O_{1y}} \\ v_{O_{1z}} \end{pmatrix}; \quad \vec{\omega} = \begin{pmatrix} \omega_x \\ \omega_y \\ \omega_z \end{pmatrix}; \quad \overrightarrow{O_1 O_2} = \begin{pmatrix} O_1 O_{2x} \\ O_1 O_{2y} \\ O_1 O_{2z} \end{pmatrix}; \quad \vec{\gamma} = \begin{pmatrix} 0 \\ \gamma_y \\ \gamma_z \end{pmatrix}; \quad \overrightarrow{v_{mv}} = \begin{pmatrix} v_{mv_x} \\ v_{mv_y} \\ v_{mv_z} \end{pmatrix};$$

on peut calculer les vitesses $\delta v_{y_c}$ et $\delta v_{z_c}$ en sortie du capteur virtuel, par la projection sur les axes $y_c$ et $z_c$ respectivement du résultat du produit $\quad C(\alpha, \beta) \begin{pmatrix} v_{mv_x} \\ v_{mv_y} \\ v_{mv_z} \end{pmatrix} \quad$ et où $\quad \overrightarrow{v_{mv}} = \begin{pmatrix} v_{mv_x} \\ v_{mv_y} \\ v_{mv_z} \end{pmatrix} \quad$ est donné par : $\overrightarrow{v_{mv}} = \overrightarrow{v_{o1}} + \vec{\omega} \times \overrightarrow{O_1 O_2} + \vec{\gamma}$.

Sachant que $|\alpha| < 5°$ et $|\beta| < 5°$ étant donné qu'on installe la centrale inertielle de manière à ce que l'axe selon $x$ de la centrale inertielle soit incliné au maximum dans un cône de 5° par rapport l'axe $x_c$ de la caisse du véhicule, il est possible d'exprimer $\delta v_{y_c}$ et $\delta v_{z_c}$ en fonction des termes du 1$^{er}$ ordre de la manière suivante :

$$\begin{cases} \delta v_{y_c} = -\alpha \left(v_{O_{1_x}} + \omega_y O_1 O_{2_z} - \omega_z O_1 O_{2_y}\right) + v_{O_{1_y}} + \omega_z O_1 O_{2_x} - \omega_x O_1 O_{2_z} + \gamma_y \\ \delta v_{z_c} = \beta \left(v_{O_{1_x}} + \omega_y O_1 O_{2_z} - \omega_z O_1 O_{2_y}\right) + v_{O_{1_z}} + \omega_x O_1 O_{2_y} - \omega_y O_1 O_{2_x} + \gamma_z \end{cases}$$

Lorsqu'on ne prend pas en compte le terme $\vec{\gamma}$, on exprime $\delta v_{y_c}$ et $\delta v_{z_c}$ en fonction des termes du 1$^{er}$ ordre de la manière suivante :

$$\begin{cases} \delta v_{y_c} = -\alpha \left(v_{O_{1_x}} + \omega_y O_1 O_{2_z} - \omega_z O_1 O_{2_y}\right) + v_{O_{1_y}} + \omega_z O_1 O_{2_x} - \omega_x O_1 O_{2_z} \\ \delta v_{z_c} = \beta \left(v_{O_{1_x}} + \omega_y O_1 O_{2_z} - \omega_z O_1 O_{2_y}\right) + v_{O_{1_z}} + \omega_x O_1 O_{2_y} - \omega_y O_1 O_{2_x} \end{cases}$$

On remarque que les vitesses $\delta v_{y_c}$ et $\delta v_{z_c}$ calculées dans le bloc modèle véhicule dépendent tout particulièrement de $\vec{v_{O_1}}, \vec{\omega}$ estimés par l'algorithme de navigation inertielle.

La colinéarité théorique de la vitesse $\vec{v_{mv}}$ avec l'axe $x_c$ doit se traduire par la nullité des vitesses transverses $\delta v_{y_c}$ et $\delta v_{z_c}$ quel que soit le déplacement du véhicule puisque par principe les vitesses transversales calculées par le capteur virtuel sont toujours nulles pour un véhicule correspondant au modèle de véhicule.

En pratique, l'étape ultérieure de correction effectuée dans le module de calcul de correction consiste à appliquer la relation suivante :

$$\begin{cases} \delta v_{y_c} = \varepsilon_{y_c} \\ \delta v_{z_c} = \varepsilon_{z_c} \end{cases}$$

où les termes $\varepsilon_{y_c}$ et $\varepsilon_{z_c}$ proviennent des phénomènes non pris en compte par le modèle du véhicule utilisé, tels que des effets de suspensions.

On peut par exemple modéliser ces termes $\varepsilon_{y_c}$ et $\varepsilon_{z_c}$ par des bruits blancs Gaussiens de moyenne nulle. Leurs écarts-types ne sont pas forcément égaux et peuvent être fixes ou dépendre de la dynamique ferroviaire qui rend la précision de chaque mesure différente.

On peut calculer des vitesses transversales $\delta v_{y_c}$ et $\delta v_{z_c}$ instantanées. Mais, dans le cas où $f_{pred} > f_{maj}$, il est possible de calculer $\delta v_{y_c}$ et $\delta v_{z_c}$ (à partir de ces mêmes grandeurs $\vec{v_{O_1}}, \vec{\omega}$) intégrées sur le pas de temps $\frac{1}{f_{maj}}$ avec $f_{maj}$ la fréquence de l'étape de mise à jour, ce qui permet de diminuer le bruit de mesure. La même équation de correction est ensuite appliquée.

Le couplage des équations

$$\begin{cases} \delta v_{y_c} = \varepsilon_{y_c} \\ \delta v_{z_c} = \varepsilon_{z_c} \end{cases}$$

et

$$\dot{\vec{v_{O_1}}} = \vec{a} + \vec{g} - (\vec{\omega} + 2\vec{\omega_t}) \times \vec{v_{O_1}}$$

dans l'estimateur, permet d'isoler et d'observer tout particulièrement les paramètres suivants :

- Les angles de désalignements $\alpha$ et $\beta$ ainsi que les biais $\vec{b_a}$ des accéléromètres selon les axes $y$ et $z$ lors d'un déplacement rectiligne à dévers constant ;

- Le bras de levier $O_1O_{2_x}$ et le biais $\overrightarrow{b_a}$ de l'accéléromètre selon l'axe $x$ lors d'un déplacement à courbure non nulle ou lors d'un changement de déclivité ;
- Les bras de levier $O_1O_{2_y}$ et $\overrightarrow{O_1O_2}$, lors d'un changement de dévers ;
- La distance inter-boggies $B_1B_2$ lors d'un passage sur un aiguillage en déviation ou d'un raccordement cubique ;
- La succession des différentes configurations de la voie ferrée permet également d'observer les biais $\overrightarrow{b_\omega}$ des trois gyromètres.

On rappelle que la distance inter-boggies $B_1B_2$, agissant sur le terme $\overrightarrow{\gamma}$, est un paramètre d'installation qui peut être pris en compte dans l'estimateur de manière optionnelle.

On comprend que, de manière générale, augmenter la longueur de la trajectoire et le nombre de configurations des rails rencontrées améliore l'observabilité des biais des six capteurs et celle des différents paramètres du modèle du véhicule, y compris les paramètres d'installation. Ces observations améliorent fortement la mesure du vecteur vitesse qui fournit le vecteur déplacement du véhicule ferroviaire après intégration. Pour les calculs et estimations, l'estimateur n'a pas besoin de connaître le type de la voie sur laquelle le véhicule circule.

Il est donc préférable que le véhicule parcoure un trajet suffisamment varié pour rencontrer ces différentes configurations de voie afin de déterminer les paramètres d'installation et les biais de la centrale inertielle.

On va maintenant détailler en relation avec la figure 4 les calculs concernant plus précisément l'estimateur et le filtre de Kalman utilisé dans l'exemple décrit. Concernant l'État du filtre de Kalman étendu à l'instant $k$, celui-ci est représenté par l'estimation du vecteur d'état $\hat{x}_{k|k}$ et la matrice de covariance associée $P_{k|k}$. Le vecteur d'état dans le cas général prenant en compte le terme $\overrightarrow{\gamma}$, est défini suivant l'expression suivante :

$$\hat{x} = (\underbrace{\overrightarrow{r_{O_1}}, \overrightarrow{v_{O_1}}, \psi, \theta, \phi, \overrightarrow{b_a}, \overrightarrow{b_\omega}}_{(15 \times 1)} | \underbrace{\alpha, \beta, \overrightarrow{O_1O_2}}_{(5 \times 1)} | \underbrace{B_1B_2}_{(1 \times 1)}) \quad (21 \times 1)$$

avec

- $\overrightarrow{r_{O_1}}$ : La position du point $O_1$ de la caisse dans le repère terrestre $(3 \times 1)$ ;
- $\overrightarrow{v_{O_1}}$ : Le vecteur vitesse du point $0_1$ de la caisse $(3 \times 1)$ ;
- $\psi, \theta, \phi$ : Sont les angles de cap, roulis, tangage $(3 \times 1)$ ;
- : Les biais des trois accéléromètres $(3 \times 1)$ ;
- $\overrightarrow{b_\omega}$ : Les biais des trois gyromètres $(3 \times 1)$ ;
- $\alpha$ : L'angle de désalignement en cap $(1 \times 1)$ ;
- $\beta$ : L'angle de désalignement en tangage $(1 \times 1)$ ;
- $\overrightarrow{O_1O_2}$ : Le bras de levier entre la centrale inertielle et le capteur virtuel $(3 \times 1)$ ;
- $B_1B_2$ : La distance inter-boggies $(1 \times 1)$.

Lors de l'étape de prédiction l'état du filtre de Kalman étendu est obtenu de la manière suivante :

$$\hat{x}_{k|k-1} = f(\hat{x}_{k-1|k-1}, \overrightarrow{a_m}, \overrightarrow{\omega_m})$$
$$P_{k|k-1} = F_k P_{k-1|k-1} F_k^T + Q_k$$

Avec :

- La fonction $f$ est utilisée pour prédire l'estimation du vecteur d'état $\hat{x}_{k|k-1}$ à partir de l'estimation du vecteur d'état précédent $\hat{x}_{k-1|k-1}$ et des mesures inertielles $\overrightarrow{a_m}, \overrightarrow{\omega_m}$. Cette fonction réalise en particulier l'intégration de l'équation différentielle de vitesse ;
- $\overrightarrow{a_m}$ : La mesure par les accéléromètres de la centrale inertielle des accélérations propre de la caisse $(3 \times 1)$, le vecteur des accélérations propres de la caisse corrigé des biais des trois accéléromètres étant tel que $\overrightarrow{a} = \overrightarrow{a_m} + \overrightarrow{b_a}$ ;
- $\overrightarrow{\omega_m}$ : La mesure par les trois gyromètres de la centrale inertielle du vecteur rotation de la caisse par rapport au repère terrestre $(3 \times 1)$, le vecteur rotation de la caisse par rapport au repère terrestre corrigé des biais $\overrightarrow{b_\omega}$ des trois gyromètres étant tel que : $\overrightarrow{\omega} = \overrightarrow{\omega_m} + \overrightarrow{b_\omega}$.

$$F_k = \frac{\partial f}{\partial x}\big|_{\hat{x}_{k-1|k-1}} = \begin{pmatrix} F^1_{k\,15\times15} & 0_{15\times5} & 0_{15\times1} \\ 0_{5\times15} & I_{5\times5} & 0_{5\times1} \\ 0_{1\times15} & 0_{1\times5} & I_{1\times1} \end{pmatrix}$$ est la matrice Jacobienne de la fonction $f$ permettant de prédire l'estimation de la covariance $P_{k|k-1}$ à partir de l'estimation de la covariance précédente $P_{k-1|k-1}$ ;.

- $$Q_k = \begin{pmatrix} Q^1_{k\,15\times15} & 0_{15\times5} & 0_{15\times1} \\ 0_{5\times15} & Q^2_{5\times5} & 0_{5\times1} \\ 0_{1\times15} & 0_{1\times5} & Q^3_{1\times1} \end{pmatrix}$$ est la matrice de covariance du bruit de la prédiction où $Q^1_{k\,15\times15}$ modélise les bruits de mesure de la centrale inertielle.

A noter que dans le cas où les états liés au capteur virtuel ($\alpha$, $\beta$, $\overrightarrow{O_1O_2}$, $B_1B_2$) sont supposés devoir converger vers une valeur constante, les matrices de covariance du bruit de la prédiction de ces états sont telles que $Q^2_{5\times5} = 0_{5\times5}$ et $Q^3_{1\times1} = 0_{1\times1}$ . Il est néanmoins connu que la position de l'axe de roulis de la caisse varie en fonction de la dynamique ferroviaire. En effet, cette position dépend tout particulièrement de l'effet des suspensions ainsi que du tracé de voie lors de la prise de dévers qui est généralement provoqué par une surélévation du rail extérieur. Il peut donc être intéressant de minorer les écarts-types des états de bras de levier $\overrightarrow{O_1O_2}$ en utilisant une valeur adaptée pour la matrice $Q^2_{5\times5}$ .

Le vecteur vitesse $\overrightarrow{v_{o_1}}$ dépend des biais des capteurs inertiels ($\overrightarrow{b_a}$, $\overrightarrow{b_\omega}$) à travers la fonction $f$ ainsi que des états liés au capteur virtuel ($\alpha$, $\beta$, $\overrightarrow{O_1O_2}$, $B_1B_2$) à travers les corrections suites aux mesures précédentes.

Lors de l'étape de mise à jour, l'état du filtre de Kalman est obtenu de la manière suivante :

$$\tilde{y}_k = z_k - h(\hat{x}_{k|k-1}, \overrightarrow{\omega_m})$$

$$S_k = H_k P_{k|k-1} H_k^T + R_k$$

$$K_k = P_{k|k-1} H_k^T S_k^{-1}$$

$$\hat{x}_{k|k} = \hat{x}_{k|k-1} + K_k \tilde{y}_k$$

$$P_{k|k} = (I_{21\times21} - K_k H_k) P_{k|k-1}$$

Avec :

- $z_k = \begin{pmatrix} 0 \\ 0 \end{pmatrix}$ la mesure de vitesses transverses nulles du capteur virtuel.

- $h(\hat{x}_{k|k-1}, \overrightarrow{\omega_m}) = \begin{pmatrix} \delta v_{y_c}(\hat{x}_{k|k-1}, \overrightarrow{\omega_m}) \\ \delta v_{z_c}(\hat{x}_{k|k-1}, \overrightarrow{\omega_m}) \end{pmatrix}$ est la fonction utilisée par le capteur virtuel pour estimer les vitesses transverses à partir de l'estimation du vecteur d'état prédit. A noter que le vecteur $\overrightarrow{\gamma}$ utilisé par la fonction h dépend de $\overrightarrow{v_{o_1}}$ , et de la distance inter-boggies $B_1B_2$,

- $H_k = \frac{\partial h}{\partial x}\big|_{\hat{x}_{k|k-1}}$ est la matrice Jacobienne de la fonction $h$.

- $R_k = \begin{pmatrix} \varepsilon_{y_c} & 0 \\ 0 & \varepsilon_{z_c} \end{pmatrix}$ est la matrice de covariance du bruit de mesure du capteur virtuel. Dans le cas le plus simple ce bruit est configuré tel que $\varepsilon_{y_c}$ et $\varepsilon_{z_c}$ sont constants et égaux. Ils représentent la variance du bruit de mesure, ce bruit étant supposé blanc et gaussien. Dans un cas plus élaboré ce bruit peut dépendre d'une entrée telle que

$\overrightarrow{a_m}$ ou les variations temporelles de $\overrightarrow{\omega}$, l'erreur étant plus importante en cas de forte dynamique suite à des effets de suspensions non modélisées ou d'une géométrie des rails inhabituelle. Dans le cadre d'un filtrage adaptatif la valeur des paramètres $\varepsilon_{y_c}$ et $\varepsilon_{z_c}$ à l'étape $k$ peut également dépendre des magnitudes des résidus calculés précédemment directement obtenues à partir des innovations $\tilde{y}_{k-i}$ avec $0 \le i \le k$.

Pour des applications pratiques, les vecteurs $\overrightarrow{a_m}$, $\overrightarrow{\omega_m}$ et l'étape de prédiction sont produits et est répétée à une fréquence de prédiction $f_{pred}$ qui peut être de 100 *Hz* par exemple. Le calcul des variations temporelles de $\overrightarrow{\omega}$ à partir des mesures $\overrightarrow{\omega_m}$ est fait par le capteur virtuel dans le cadre de l'étape de mise à jour réalisée à une plus basse fréquence $f_{maj}$ qui peut être de 1 *Hz.* La fréquence de sortie du vecteur de vitesse instantanée $\overrightarrow{V_u}$ et d'éventuels autres paramètres de sortie calculés, peut être n'importe quelle fréquence ou sous-fréquence de la fréquence de prédiction $f_{pred}$, par exemple 100Hz, 10Hz ou 1 Hz.

Certains effets négligés propres à la dynamique ferroviaire rendent les mesures nulles des deux vitesses transverses du capteur virtuel imparfaites. Il est possible d'élaborer un modèle d'erreur plus complexe qu'un simple bruit blanc pour les erreurs de mesure du capteur virtuel, basé en particulier sur des termes supplémentaires dans le vecteur d'états du filtre de Kalman.

Grâce à l'invention, la centrale inertielle peut être installée n'importe où dans la caisse du véhicule, puisque les biais d'installation sont corrigés avec le calcul de $\delta v_{y_c}$ et $\delta v_{z_c}$.

La fonction principale du système en mode nominal est de fournir le vecteur vitesse instantanée $\overrightarrow{V_u}$ du véhicule ferroviaire. Dans une modalité plus évoluée, le vecteur de rotation instantané $\overrightarrow{\omega_u}$ est aussi calculé par l'estimateur. D'autres modes sont possibles, par exemple pour fournir le vecteur déplacement du véhicule. Le déplacement est obtenu par intégration du vecteur de vitesse instantanée $\overrightarrow{V_u}$ calculé. On peut utiliser en plus du système et associé au procédé des informations d'autres capteurs comme par exemple celles d'un positionneur global (« GNSS »), d'un capteur matériel de vitesse ou de distance parcourue auxiliaire, et/ou des informations une base de données telle que la cartographie des voies ferrées pour améliorer la précision des résultats calculés en sortie de l'estimateur dont le vecteur vitesse instantanée $\overrightarrow{V_u}$, et en particulier lorsqu'on calcule la position géographique du véhicule ferroviaire ce qui nécessite de disposer de données complémentaires.

Il est mis en oeuvre un filtre de Kalman étendu dans l'exemple de réalisation détaillé ci-dessus, mais dans d'autres modalités de mise en oeuvre on peut utiliser un filtre de Kalman inodore ou tout autre estimateur comportant une étape de prédiction et une étape de mise à jour.

**Revendications**

1. Procédé de calcul par un estimateur d'un vecteur de vitesse instantanée $\overrightarrow{V_u}$, d'un véhicule ferroviaire (1) pouvant se déplacer le long d'une voie ferrée (2), le véhicule comportant une caisse (10), la caisse étant disposée sur deux boggies (11, 11'), les boggies comportant des essieux (12) à roues roulant sur des rails (20) de la voie ferrée, les contacts des roues sur les rails définissant un plan de roulement du véhicule, chaque boggie étant articulé à la caisse au moins en rotation autour d'un axe de rotation, la caisse pouvant subir un mouvement de roulis autour d'un axe de roulis, l'estimateur recevant en entrée des mesures d'une centrale inertielle (3) installée en un point fixe de la caisse, la centrale inertielle comportant des accéléromètres et des gyromètres et permettant de produire des mesures selon un repère orthonormé $x, y, z$ centré en un point $O_1$ situé dans la centrale inertielle, l'estimateur calculant en sortie le vecteur de vitesse instantanée $\overrightarrow{V_u}$, du véhicule ferroviaire,

   dans lequel :

   soit deux points $B_1$ et $B_2$ situés aux intersections des axes de rotation des boggies et du plan de roulement du véhicule,
   soit un repère orthonormé fixe $x_c, y_c, z_c$ de la caisse du véhicule où l'axe $x_c$ (14) correspond à un axe longitudinal de la caisse et passant par les points $B_1$ et $B_2$, ledit axe $x_c$ étant colinéaire au vecteur de vitesse instantanée $\overrightarrow{V_u}$ du véhicule lors d'un déplacement rectiligne à dévers constant du véhicule,

   - on détermine un modèle M mathématique de la dynamique du véhicule se déplaçant sur une voie, ledit modèle étant fonction de biais de la centrale inertielle et de paramètres d'installation,
   - on détermine sur la base du modèle M, un capteur virtuel permettant de calculer, à partir de paramètres du modèle, deux vitesses théoriques transverses, $\delta v_{y_c}$ selon l'axe $y_c$ et $\delta v_{z_c}$ selon l'axe $z_c$,
   - on met en oeuvre un estimateur itératif de calcul du vecteur de vitesse instantanée $\overrightarrow{V_u}$, et comportant le

capteur virtuel, l'estimateur étant configuré afin que les deux vitesses théoriques transverses soient nulles quelles que soient les configurations de la voie, l'estimateur permettant de corriger les biais de la centrale inertielle et d'estimer des paramètres d'installation,

dans lequel, on ne met pas en oeuvre un capteur matériel de vitesse ou de distance parcourue auxiliaire pour calculer le vecteur de vitesse instantanée $\overrightarrow{V_u}$, et dans lequel, on détermine le capteur virtuel sur la base d'un modèle du véhicule M($\overrightarrow{O_1O_2}$, $\alpha$, $\beta$, $\overrightarrow{v_{o1}}$, $\overrightarrow{\omega}$, $\delta v_{y_c}$, $\delta v_{z_c}$), et les paramètres permettant au capteur virtuel de calculer les deux vitesses théoriques transverses sont :

- $\overrightarrow{O_1O_2}$ qui est le vecteur reliant le point $O_1$ au point $O_2$ où le point $O_2$ est un point considéré situé à l'intersection de l'axe de roulis de la caisse et d'un plan orthogonal à $x_c$ situé à égale distance des deux points $B_1$ et $B_2$, ou est un point considéré voisin de ladite intersection, ledit point $O_2$ étant alors un point situé à une distance D déterminée, autour de ladite intersection de l'axe de roulis de la caisse et du plan orthogonal à $x_c$ situé à égale distance des deux points $B_1$ et $B_2$, D étant inférieur à 1 m,
- $\alpha$ l'angle de désalignement en cap entre l'axe $x$ et l'axe $x_c$,
- $\beta$ l'angle de désalignement en tangage entre l'axe $x$ et l'axe $x_c$,
- un vecteur vitesse $\overrightarrow{v_{o1}}$ au point $O_1$,
- un vecteur rotation $\overrightarrow{\omega}$ de la caisse par rapport au repère terrestre,

les paramètres $\overrightarrow{O_1O_2}$, $\alpha$, $\beta$ étant les paramètres d'installation, l'estimateur permettant de corriger les biais créés par la centrale inertielle et par les angles de désalignements $\alpha$, $\beta$, et par le bras de levier $\overrightarrow{O_1O_2}$.

**2.** Procédé selon la revendication 1, **caractérisé en ce qu'**on installe la centrale inertielle dans la caisse du véhicule de manière à ce que l'axe selon $x$ de la centrale inertielle soit incliné au maximum dans un cône de 5° par rapport l'axe $x_c$ de la caisse du véhicule ou, sinon, on effectue un calibrage préalable et ensuite, lors du calcul d'au moins du vecteur de vitesse instantanée $\overrightarrow{V_u}$ par l'estimateur, on traite les mesures de la centrale inertielle afin que les mesures produites par la centrale inertielle et traitées correspondent à celles d'une centrale inertielle qui aurait été installée de manière à ce que l'axe selon $x$ de la centrale inertielle soit incliné au maximum dans un cône de 5° par rapport l'axe $x_c$ de la caisse du véhicule.

**3.** Procédé selon la revendication 2, **caractérisé en ce qu'**on calcule $\delta v_{y_c}$ et $\delta v_{z_c}$ sur la base du modèle du véhicule M($\overrightarrow{O_1O_2}$, $\alpha$, $\beta$, $\overrightarrow{\omega}$, $\delta v_{y_c}$, $\delta v_{z_c}$) par :

$$\begin{cases} \delta v_{y_c} = -\alpha\left(v_{0_{1_x}} + \omega_y O_1 O_{2_z} - \omega_z O_1 O_{2_y}\right) + v_{0_{1_y}} + \omega_z O_1 O_{2_x} - \omega_x O_1 O_{2_z} \\ \delta v_{z_c} = \beta\left(v_{0_{1_x}} + \omega_y O_1 O_{2_z} - \omega_z O_1 O_{2_y}\right) + v_{0_{1_z}} + \omega_x O_1 O_{2_y} - \omega_y O_1 O_{2_x} \end{cases}$$

**4.** Procédé selon la revendication 2, **caractérisé en ce que** les paramètres permettant au capteur virtuel de calculer les deux vitesses théoriques transverses $\delta v_{y_c}$ et $\delta v_{z_c}$ comportent en outre une distance inter-boggies $B_1B_2$, et **en ce qu'**on calcule $\delta v_{y_c}$ et $\delta v_{z_c}$ sur la base d'un modèle du véhicule M($\overrightarrow{O_1O_2}$, $\alpha$, $\beta$, $B_1B_2$, $\overrightarrow{v_{o1}}$, $\overrightarrow{\omega}$, $\delta v_{y_c}$, $\delta v_{z_c}$) par :

$$\begin{cases} \delta v_{y_c} = -\alpha\left(v_{0_{1_x}} + \omega_y O_1 O_{2_z} - \omega_z O_1 O_{2_y}\right) + v_{0_{1_y}} + \omega_z O_1 O_{2_x} - \omega_x O_1 O_{2_z} + \gamma_y \\ \delta v_{z_c} = \beta\left(v_{0_{1_x}} + \omega_y O_1 O_{2_z} - \omega_z O_1 O_{2_y}\right) + v_{0_{1_z}} + \omega_x O_1 O_{2_y} - \omega_y O_1 O_{2_x} + \gamma_z \end{cases}$$

où $\gamma$ correspond à une vitesse transversale transitoire dépendant de $\overrightarrow{v_{o1}}$, des variations temporelles de $\overrightarrow{\omega}$ et de la distance inter-boggies $B_1B_2$.

**5.** Procédé selon l'une quelconque des revendications 1 à 4, **caractérisé en ce que** l'estimateur calcule en outre un ou plusieurs de : un vecteur rotation instantanée $\overrightarrow{\omega_u}$, un déplacement du véhicule, une position du véhicule, une attitude du véhicule, des écart-types des valeurs calculées par l'estimateur.

**6.** Procédé selon l'une quelconque des revendications 1 à 5, **caractérisé en ce qu'**au moins un des paramètres d'installation $\overrightarrow{O_1O_2}$, $\alpha$ et $\beta$ et, éventuellement $B_1B_2$, est initialisé dans l'estimateur par une mesure dudit paramètre in-situ dans la caisse du véhicule

**7.** Procédé selon l'une quelconque des revendications 1 à 6, **caractérisé en ce que**, dans l'estimateur, le capteur virtuel de vitesse est configuré pour calculer des vitesses transverses instantanées ou, alors, des vitesses transverses intégrées sur la durée $\dfrac{1}{f_{maj}}$ de l'étape de mise à jour avec $f_{maj}$ la fréquence de mise à jour de l'estimateur.

**8.** Procédé selon l'une quelconque des revendications 1 à 7, **caractérisé en ce qu'**on met en oeuvre un estimateur qui comporte un filtre de Kalman.

**9.** Procédé selon l'une quelconque des revendications 1 à 8, **caractérisé en ce qu'**on met en oeuvre une centrale inertielle qui est gyrocompassante.

**10.** Système permettant de calculer un vecteur de vitesse instantanée $\overrightarrow{V_u}$, d'un véhicule ferroviaire pouvant se déplacer le long d'une voie ferrée, le véhicule comportant une caisse, la caisse étant disposée sur deux boggies, les boggies comportant des essieux à roues roulant sur des rails de la voie ferrée, les contacts des roues sur les rails définissant un plan de roulement du véhicule, chaque boggie étant articulé à la caisse au moins en rotation autour d'un axe de rotation, la caisse pouvant subir un mouvement de roulis autour d'un axe de roulis, le système comportant un estimateur du vecteur de vitesse instantanée $\overrightarrow{V_u}$, l'estimateur étant configuré pour calculer en sortie le vecteur de vitesse instantanée $\overrightarrow{V_u}$, du véhicule ferroviaire selon le procédé de l'une quelconque des revendications 1 à 9, l'estimateur étant configuré pour recevoir en entrée des mesures d'une centrale inertielle installée en un point fixe de la caisse, la centrale inertielle comportant des accéléromètres et des gyromètres et permettant de produire des mesures selon un repère orthonormé *x, y, z* centré en un point $O_1$ situé dans la centrale inertielle.

**Patentansprüche**

**1.** Verfahren zur Berechnung eines Vektors momentaner Geschwindigkeit $V_u$ eines sich auf einem Schienenweg (2) bewegen könnenden Schienenfahrzeugs (1) durch ein Schätzorgan, wobei das Fahrzeug einen Kasten (10) aufweist, wobei der Kasten auf zwei Fahrgestellen (11, 11') aufgesetzt ist, wobei die Fahrgestelle Achsen (12) mit auf Schienen (20) des Schienenwegs rollenden Rädern aufweisen, wobei die Kontakte der Räder auf den Schienen eine Rollebene des Fahrzeugs definieren, wobei jedes Fahrgestell am Kasten mindestens um eine Drehachse drehbar angelenkt ist, wobei der Kasten einer Rollbewegung um eine Rollachse ausgesetzt sein kann, wobei das Schätzorgan am Eingang Messungen einer an einem festen Punkt des Kastens angebrachten Trägheitszentrale (3) empfängt, wobei die Trägheitszentrale Beschleunigungsmesser und Kreisel aufweist und ermöglicht, Messungen in einem in der Trägheitszentrale angeordneten, auf einen Punkt $O_1$ zentrierten rechtwinkligen x,y,z-Bezugssystem zu erzeugen, wobei das Schätzorgan am Ausgang den Vektor momentaner Geschwindigkeit $\overrightarrow{V_u}$ des Schienenfahrzeugs berechnet,
wobei:

entweder zwei an den Schnittpunkten der Drehachsen der Fahrgestelle mit der Rollebene gelegene Punkte $B_1$ und $B_2$
oder ein orthonormierter Festpunkt $x_c$, $y_c$, $z_c$ des Fahrzeugkastens, bei dem die Achse $x_c$ (14) einer Längsachse des Kastens entspricht und durch die Punkte $B_1$ und
$B_2$ geht, wobei die Achse $x_c$ zum Vektor der momentanen Geschwindigkeit $\overrightarrow{V_u}$ des Fahrzeugs kolinear ist, wenn das Fahrzeug mit konstanter Schräglage geradlinig bewegt wird,

- man ein mathematisches Modell M der Dynamik des sich auf einem Schienenweg bewegenden Fahrzeugs bestimmt, wobei das Modell von Schrägrichtungen der Trägheitszentrale und von Installationsparametern abhängt,
- man auf der Grundlage des Modells M einen virtuellen Sensor bestimmt, der ermöglicht, von den Parametern des Modells ausgehend, zwei theoretische Quergeschwindigkeiten $\delta v_{y_c}$ gemäß der $y_c$-Achse und $\delta v_{z_c}$ gemäß der $z_c$-Achse zu berechnen,

- man ein iteratives Schätzorgan zum Berechnen des Vektors der momentanen Geschwindigkeit $\overrightarrow{V_u}$ einsetzt, das den virtuellen Sensor aufweist, wobei das Schätzorgan so ausgelegt ist, daß die beiden theoretischen Quergeschwindigkeiten Null sind, wie immer auch die Zusammensetzungen des Wegs sind, wobei das Schätzorgan ermöglicht, die Schrägrichtungen der Trägheitszentrale zu korrigieren und die Installationsparameter abzuschätzen,

wobei man keinen materiellen Sensor für die Geschwindigkeit oder hilfsweise die zurückgelegte Strecke verwendet, um den Vektor der momentanen Geschwindigkeit zu berechnen, und wobei man den virtuellen Sensor auf der Basis eines Modells des Fahrzeugs $M(\overrightarrow{O_1O_2}, \alpha, \beta, \overrightarrow{v_{o1}}, \overrightarrow{\omega}, \delta v_{y_c}, \delta v_{z_c})$ bestimmt und wobei die Parameter, die dem virtuellen Sensor ermöglichen, die beiden theoretischen Quergeschwindigkeiten zu berechnen, die folgenden sind:

- $\overrightarrow{O_1O_2}$ der der Vektor ist, der den Punkt $O_1$ mit dem Punkt $O_2$ verbindet, wobei der Punkt $O_2$ ein Punkt ist, der als am Schnittpunkt der Rollachse des Kastens mit einer zu $x_c$ im rechten Winkel liegenden Ebene und im gleichen Abstand von den beiden Punkten $B_1$ und $B_2$ befindlich betrachtet wird, oder ein Punkt ist, der als zur besagten Schnittachse benachbart liegend betrachtet wird, wobei der Punkt $O_2$ dann ein Punkt ist, der in einem bestimmten Abstand D um den Schnittpunkt der Rollachse des Kastens mit der zu $x_c$ senkrechten Ebene liegt, die in gleichem Abstand von den beiden Punkten $B_1$ und $B_2$ liegt, wobei D kleiner als 1 m ist,
- $\alpha$ der Versatzwinkel an der Spitze zwischen der Achse x und der Achse $x_c$ ,
- $\beta$ der Nickversatzwinkel zwischen der Achse x und der Achse $x_c$ ,
- ein Geschwindigkeitsvektor $\overrightarrow{v_{o1}}$ am Punkt $O_1$,
- ein Drehvektor $\overrightarrow{\omega}$ des Kastens gegenüber dem terrestrischen Bezugssystem sind,

wobei die Parameter $\overrightarrow{O_1O_2}$, $\alpha$, $\beta$ die Installationsparameter sind, wobei das Schätzorgan ermöglicht, die durch die Trägheitszentrale und durch die Winkel der fehlenden Ausrichtung $\alpha$, $\beta$ und durch den Hebelarm $\overrightarrow{O_1O_2}$ erzeugten Schrägrichtungen zu korrigieren.

2.  Verfahren gemäß Anspruch 1, **dadurch gekennzeichnet, daß** man die Trägheitszentrale im Kasten des Gehäuses so installiert, daß die x-Achse der Trägheitszentrale maximal in einem Kegel von 5° in Bezug auf die $x_c$-Achse des Kastens des Fahrzeugs geneigt ist oder daß man sonst zuvor eine Kalibrierung durchführt und dann, bei der Berechnung mindestens eines Vektors $\overrightarrow{V_u}$ der momentanen Geschwindigkeit durch das Schätzorgan die Messungen der Trägheitszentrale bearbeitet, damit die durch die Trägheitszentrale produzierten und bearbeiteten Messungen denen einer Trägheitszentrale entsprechen, die so installiert gewesen wäre, daß die x-Achse der Trägheitszentrale maximal in einem Kegel von 5° in Bezug auf die $x_c$-Achse des Kastens des Fahrzeugs geneigt gewesen wäre.

3.  Verfahren gemäß Anspruch 2, **dadurch gekennzeichnet, daß** man $\delta v_{y_c}$ und $\delta v_{z_c}$ auf der Grundlage des Modells des Fahrzeugs $M(\overrightarrow{O_1O_2}, \alpha, \beta, \overrightarrow{v_{o1}}, \overrightarrow{\omega}, \delta v_{y_c}, \delta v_{z_c})$ durch

$$\begin{cases} \delta v_{y_c} = -\alpha \left( v_{0_{1_x}} + \omega_y O_1O_{2_z} - \omega_z O_1O_{2_y} \right) + v_{0_{1_y}} + \omega_z O_1O_{2_x} - \omega_x O_1O_{2_z} \\ \delta v_{z_c} = \beta \left( v_{0_{1_x}} + \omega_y O_1O_{2_z} - \omega_z O_1O_{2_y} \right) + v_{0_{1_z}} + \omega_x O_1O_{2_y} - \omega_y O_1O_{2_x} \end{cases}$$

berechnet.

4.  Verfahren gemäß Anspruch 2, **dadurch gekennzeichnet, daß** die Parameter, die dem virtuellen Sensor ermöglichen, die beiden theoretischen Quergeschwindigkeiten $\delta v_{y_c}$ und $\delta v_{z_c}$ zu berechnen, außerdem einen Zwischenachsenabstand $B_1B_2$ aufweisen, und daß man $\delta v_{y_c}$ und $\delta v_{z_c}$ auf der Grundlage eines Modells des Fahrzeugs $M(\overrightarrow{O_1O_2}, \alpha, \beta, B_1B_2, \overrightarrow{v_{o1}}, \overrightarrow{\omega}, \delta v_{y_c}, \delta v_{z_c})$ durch

$$\begin{cases} \delta v_{y_c} = -\alpha \left( v_{O_{1_x}} + \omega_y O_1 O_{2_z} - \omega_z O_1 O_{2_y} \right) + v_{0_{1_y}} + \omega_z O_1 O_{2_x} - \omega_x O_1 O_{2_z} + \gamma_y \\ \delta v_{z_c} = \beta \left( v_{O_{1_x}} + \omega_y O_1 O_{2_z} - \omega_z O_1 O_{2_y} \right) + v_{0_{1_z}} + \omega_x O_1 O_{2_y} - \omega_y O_1 O_{2_x} + \gamma_z \end{cases}$$

berechnet,
wobei $\gamma$ einer vorübergehenden Quergeschwindigkeit entspricht, die von $\overrightarrow{v_{o1}}$ , den zeitlichen Variationen von $\overrightarrow{\omega}$ und vom Zwischenachsenabstand $B_1B_2$ abhängt.

5. Verfahren gemäß einem der Ansprüche 1 bis 4, **dadurch gekennzeichnet, daß** das Schätzorgan außerdem eine oder mehrere Größen von: einem momentanen Rotationsvektor $\overrightarrow{\omega_u}$, einem Weiterfahren des Fahrzeugs, einer Position des Fahrzeugs, einem Verhalten des Fahrzeugs, Standard-Abweichungen der von dem Schätzorgan berechneten Werte berechnet.

6. Verfahren gemäß einem der Ansprüche 1 bis 5, **dadurch gekennzeichnet, daß** mindestens einer der Installationsparameter $\overrightarrow{O_1O_2}$ , $\alpha$ und $\beta$ und gegebenenfalls $B_1B_2$ in dem Schätzorgan durch eine Vor-Ort-Messung des Parameters im Kasten des Fahrzeugs initialisiert wird.

7. Verfahren gemäß einem der Ansprüche 1 bis 6, **dadurch gekennzeichnet, daß** der virtuelle Geschwindigkeitssensor im Schätzorgan zum Berechnen der momentanen Quergeschwindigkeiten oder sonst der über die Dauer $\frac{1}{f_{maj}}$ des Schritts des auf den neuesten Stand Bringens integrierten Quergeschwindigkeiten ausgelegt ist, wobei $f_{maj}$ die Frequenz des auf den neuesten Stand Bringens des Schätzorgans ist.

8. Verfahren gemäß einem der Ansprüche 1 bis 7, **dadurch gekennzeichnet, daß** man ein Schätzorgan verwendet, das ein Kalman-Filter aufweist.

9. Verfahren gemäß einem der Ansprüche 1 bis 8, **dadurch gekennzeichnet, daß** man eine Trägheitszentrale verwendet, die gyroskopische Messungen verarbeitet.

10. System, das ermöglicht, einen momentanen Geschwindigkeitsvektor $\overrightarrow{V_u}$ eines sich auf einem Schienenweg bewegen könnenden Schienenfahrzeugs zu berechnen, wobei das Fahrzeug einen Kasten aufweist, wobei der Kasten auf zwei Fahrgestellen aufgesetzt ist, wobei die Fahrgestelle Achsen mit auf Schienen des Schienenwegs rollenden Rädern aufweisen, wobei die Kontakte der Räder auf den Schienen eine Rollebene des Fahrzeugs definieren, wobei jedes Fahrgestell am Kasten mindestens um eine Drehachse drehbar angelenkt ist, wobei der Kasten einer Rollbewegung um eine Rollachse ausgesetzt sein kann, wobei das System eine Funktion zum Schätzen des momentanen Geschwindigkeitsvektors $\overrightarrow{V_u}$ aufweist, wobei das Schätzorgan dafür ausgelegt ist, am Ausgang den momentanen Geschwindigkeitsvektor $\overrightarrow{V_u}$ des Schienenfahrzeugs nach dem Verfahren gemäß einem der Ansprüche 1 bis 9 zu berechnen, wobei das Schätzorgan dazu ausgelegt ist, am Eingang Messungen einer an einem festen Punkt des Kastens installierten Trägheitszentrale zu empfangen, wobei die Trägheitszentrale Beschleunigungsmesser und Kreisel aufweist und ermöglicht, Messungen mit einem in einem in der Trägheitszentrale gelegenen, auf einen Punkt $O_1$ zentrierten orthonormierten x,y,z-Bezugssystem zu erzeugen.

**Claims**

1. A method for calculating, by an estimator, an instantaneous velocity vector, $\overrightarrow{V_u}$, of a rail vehicle (1) capable of moving along a railway (2), the vehicle having a body (10), the body being arranged on two bogies (11, 11'), the bogies having wheel axles (12) rolling on rails (20) of the railway, the contacts of the wheels on the rails defining a rolling plane of the vehicle, each bogie being articulated to the body at least in rotation about a rotation axis, the body being capable of undergoing a roll movement about a roll axis, the estimator receiving as an input measurements from an inertial unit (3) installed at a fixed point of the body, the inertial unit comprising accelerometers and gyrometers and making it possible to produce measurements in an orthonormal reference system *x,y,z* centred on a point $O_1$ located in the inertial unit, the estimator calculating as an output the instantaneous velocity vector $\overrightarrow{V_u}$, of the rail vehicle, wherein:

with $B_1$ and $B_2$ two points located at the intersections of the rotation axes of the bogies and the rolling plane of the vehicle,

with $x_c$, $y_c$, $z_c$, a fixed orthonormal reference system of the vehicle body in which $x_c$ (14) corresponds to a longitudinal axis of the body, passing through points $B_1$ and $B_2$, said $x_c$ axis being colinear to the vehicle instantaneous velocity vector $\overrightarrow{V_u}$ during a rectilinear travel with constant superelevation of the vehicle,

- a mathematical model M of the dynamics of the vehicle moving on a railway is determined, said model being function of biases of the inertial unit and of installation parameters,
- on the basis of model M, a virtual sensor is determined, making it possible to calculate, from parameters of the model, two theoretical transverse velocities, $\delta v_{y_c}$ along $y_c$ axis and $\delta v_{z_c}$ along $z_c$ axis,
- an iterative estimator for calculating the instantaneous velocity vector $\overrightarrow{V_u}$, and comprising the virtual sensor is implemented, the estimator being configured in such a way that the two theoretical transverse velocities are zero whatever the railway configuration, the estimator making it possible to correct the inertial unit biases and to estimate installation parameters,

wherein an auxiliary physical velocity or travelled-distance sensor is not implemented for calculating the instantaneous velocity vector $\overrightarrow{V_u}$, and

wherein, the virtual sensor is determined based on a model M($\overrightarrow{O_1O_2}$, $\alpha$, $\beta$, $\overrightarrow{v_{o1}}$, $\overrightarrow{\omega}$, $\delta v_{y_c}$, $\delta v_{z_c}$) of the vehicle, and the parameters enabling the virtual sensor to calculate the two theoretical transverse velocities are:

- $\overrightarrow{O_1O_2}$, the vector connecting point $O_1$ to point $O_2$ where point $O_2$ is a point considered located at the intersection between the body roll axis and a plane orthogonal to $x_c$ located at equal distance of the two points $B_1$ and $B_2$, or is a point considered close to said intersection, said point $O_2$ being then a point located at a determined distance $D$ about said intersection of the body roll axis and the plane orthogonal to $x_c$ located at equal distance from the two points $B_1$ and $B_2$, $D$ being lower than 1 m,
- $\alpha$, the heading misalignment angle between $x$ axis and $x_c$ axis,
- $\beta$, the pitch misalignment angle between $x$ axis and $x_c$ axis,
- a velocity vector $\overrightarrow{v_{O1}}$ at point $O_1$,
- a rotation vector $\overrightarrow{\omega}$ of the body with respect to the terrestrial reference system, the parameters $\overrightarrow{O_1O_2}$, $\alpha$, $\beta$ being the installation parameters, the estimator making it possible to correct the biases created by the inertial unit and by the misalignment angles $\alpha$, $\beta$, and by the leverage arm $\overrightarrow{O_1O_2}$.

2. Method according to claim 1, **characterized in that** the inertial unit is installed in the vehicle body in such a way that the x axis of the inertial unit is inclined at most in a cone of 5° with respect to the $x_c$ axis of the vehicle body, or else a previous calibration is performed, and then, during the calculation of at least the instantaneous velocity vector $\overrightarrow{V_u}$ by the estimator, the inertial unit measurements are processed in such a way that the measurements produced by the inertial unit and processed correspond to those of an inertial unit that would have been installed in such a way that the $x$ axis of the inertial unit is inclined at most in a cone of 5° with respect to the $x_c$ axis of the vehicle body.

3. Method according to claim 2, **characterized in that** $\delta v_{y_c}$ and $\delta v_{z_c}$ are calculated on the basis of a model M($\overrightarrow{O_1O_2}$, $\alpha$, $\beta$, $\overrightarrow{v_{o1}}$, $\overrightarrow{\omega}$, $\delta v_{y_c}$, $\delta v_{z_c}$) of the vehicle, by:

$$\begin{cases} \delta v_{y_c} = -\alpha \left( v_{0_{1_x}} + \omega_y O_1 O_{2_z} - \omega_z O_1 O_{2_y} \right) + v_{0_{1_y}} + \omega_z O_1 O_{2_x} - \omega_x O_1 O_{2_z} \\ \delta v_{z_c} = \beta \left( v_{0_{1_x}} + \omega_y O_1 O_{2_z} - \omega_z O_1 O_{2_y} \right) + v_{0_{1_z}} + \omega_x O_1 O_{2_y} - \omega_y O_1 O_{2_x} \end{cases}$$

4. The method according to claim 2, **characterized in that** the parameters enabling the virtual sensor to calculate the two theoretical transverse velocities $\delta v_{y_c}$ and $\delta v_{z_c}$ further include an inter-bogie distance $B_1B_2$, and
**in that** $\delta v_{y_c}$ and $\delta v_{z_c}$ are calculated on the basis of a model M($\overrightarrow{O_1O_2}$, $\alpha$, $\beta$, $B_1B_2$, $\overrightarrow{v_{o1}}$, $\overrightarrow{\omega}$, $\delta v_{y_c}$, $\delta v_{z_c}$) of the vehicle, by:

$$\begin{cases} \delta v_{y_c} = -\alpha \left( v_{O_{1_x}} + \omega_y O_1 O_{2_z} - \omega_z O_1 O_{2_y} \right) + v_{0_{1_y}} + \omega_z O_1 O_{2_x} - \omega_x O_1 O_{2_z} + \gamma_y \\ \delta v_{z_c} = \beta \left( v_{O_{1_x}} + \omega_y O_1 O_{2_z} - \omega_z O_1 O_{2_y} \right) + v_{0_{1_z}} + \omega_x O_1 O_{2_y} - \omega_y O_1 O_{2_x} + \gamma_z \end{cases}$$

where $\gamma$ corresponds to a transient transverse velocity depending on $\overrightarrow{v_{o1}}$, the time variations of $\overrightarrow{\omega}$ and of the inter-bogie distance $B_1 B_2$.

5. Method according to anyone of claims 1 to 4, **characterized in that** the estimator further calculates one or several of: an instantaneous rotation vector $\overrightarrow{\omega_u}$, a movement of the vehicle, a position of the vehicle, an attitude of the vehicle, standard deviations of the values calculated by the estimator.

6. Method according to anyone of claims 1 to 5, **characterized in that** at least one of the installation parameters $\overrightarrow{O_1 O_2}$, $\alpha$ and $\beta$, and potentially $B_1 B_2$, is initialized in the estimator by a measurement of the in-situ parameter in the vehicle body.

7. Method according to anyone of claims 1 6, **characterized in that**, in the estimator, the virtual velocity sensor is configured to calculate instantaneous transverse velocities or, then, transverse velocities integrated over the duration $\dfrac{1}{f_{maj}}$ of the updating step, with $f_{maj}$ the estimator updating frequency.

8. Method according to anyone of claims 1 to 7, **characterized in that** an estimator including a Kalman filter is implemented.

9. Method according to anyone of claims 1 to 8, **characterized in that** a gyrocompass inertial unit is implemented.

10. A system for calculating an instantaneous velocity vector, $\overrightarrow{V_u}$, of a rail vehicle capable of moving along a railway, the vehicle having a body, the body being arranged on two bogies, the bogies having wheel axles rolling on rails of the railway, the contacts of the wheels on the rails defining a rolling plane of the vehicle, each bogie being articulated to the body at least in rotation about a rotation axis, the body being capable of undergoing a roll movement about a roll axis, the system comprising an estimator of the instantaneous velocity vector, $\overrightarrow{V_u}$, the estimator being configured to calculate as an output the instantaneous velocity vector $\overrightarrow{V_u}$, of the rail vehicle according to the method of any one of claims 1 to 9, the estimator being configured for receiving as an input measurements from an inertial unit installed at a fixed point of the body, the inertial unit comprising accelerometers and gyrometers and making it possible to produce measurements in an orthonormal reference system $x, y, z$ centred at a point $O_1$ located in the inertial unit.

[Fig. 1]

[Fig. 2]

[Fig. 3]

[Fig. 4]

**EP 4 153 465 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2219930 B1
- EP 2749471 B1
- EP 3159701 B1

**Littérature non-brevet citée dans la description**

- INS/GNSS/odometer data fusion in railway applications. **REIMER C et al.** 2016 DGON INTERTIAL SENSORS AND SYSTEMS. IEEE, 20 Septembre 2016, vol. 188, 1-14